Europäisches Patentamt

European Patent Office

Office européen des brevets

(11) Veröffentlichungsnummer: **0 519 207 A1**

# EUROPÄISCHE PATENTANMELDUNG

(21) Anmeldenummer: **92108058.6**

(22) Anmeldetag: **13.05.92**

(51) Int. Cl.5: **B62D 23/00**, B62D 27/02

(30) Priorität: **19.06.91 DE 4120223**

(43) Veröffentlichungstag der Anmeldung:
**23.12.92 Patentblatt 92/52**

(84) Benannte Vertragsstaaten:
**DE FR GB IT NL SE**

(71) Anmelder: **Dr.Ing.h.c. F. Porsche
Aktiengesellschaft
Porschestrasse 42
W-7000 Stuttgart 40(DE)**

(72) Erfinder: **Bäuerle, Hans-Peter
Falkenweg 8
W-7251 Weissach(DE)**

(54) **Aufbau für Fahrzeuge.**

(57) Dieser Aufbau umfasst aus Aluminiumlegierungen hergestellte Hohlprofile und Knotenelemente, die eine sogenannte Space Frame-Rahmenstruktur bildend, zusammengesetzt sind.

Aus produktionstechnischen Gründen ist ein Hohlprofil zwischen zwei vorgefertigten Knotenelementen (7,8) nachträglich einzusetzen. Deshalb besteht das Hohlprofil aus wenigstens zwei Profilabschnitten (15,16), die aus einer Vormontagelage in eine konstruktive Endlage gebracht sind. Die Profilabschnitte sind in Aufnahmen (10,11) der Knotenelemente befestigt und in einem zwischen den Knotenelementen liegenden Verbindungsabschnitt z.B. durch Fügen miteinander verbunden.

FIG.1

EP 0 519 207 A1

Die Erfindung bezieht sich auf einen Aufbau nach dem Oberbegriff des Patentanspruchs 1.

Bei einem bekannten Aufbau, EP 01 46 716, der vorstehenden Gattung werden die Knotenelemente und Hohlprofile im wesentlichen nacheinander, d.h. mittels einer Folgemontage zusammengesetzt und durch geeignete Verfahren miteinander verbunden.

Aufgabe der Erfindung ist es, für fertigungsbedingt festgelegte Anordnungen von Knotenelementen, durch die Folgemontagen, z.B. ein erstes Knotenelement mit einem Hohlprofil und dann letzteres mit einem zweiten Knotenelement, ausscheiden, ein Hohlprofil zu schaffen, das problemlos in derartige Anordnungen integrierbar ist.

Erfindungsgemäß wird diese Aufgabe durch die kennzeichnenden Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß zwischen den aus produktionstechnischen Gründen festliegenden Knotenelementen, eines sogenannten Space Frame-Aufbaues, sich das mehrteilige Hohlprofil auf einfache Weise einbauen und befestigen lässt. Durch die Klebeverbindung ist nicht nur eine hochfeste Lagefixierung der Rohrabschnitte zueinander, sondern auch eine fertigungsgünstige Lösung geschaffen. Hinzu kommt, daß die das Hohlprofil bildenden Rohrteile bezüglich Herstellung einen geringen Aufwand verursachen.

Schließlich lässt sich das Hohlprofil zur gezielten Energieaufnahme bei axialer Belastung dann einsetzen, wenn das Rohrteil mit dem inneren Rohrendbereich kreisrund ist und über einen wesentlichen Teil seiner Länge einen konstanten Durchmesser aufweist. Bei dieser Ausführung bilden sich unter Krafteinwirkung an besagtem Rohrteil kontrolliert energieaufnehmende Ringfalten.

In der Zeichnung wird ein Ausführungsbeispiel der Erfindung gezeigt, das nachstehend näher beschrieben ist.

Es zeigt

Fig. 1    eine Teilseitenansicht eines Aufbaues für einen Personenwagen,

Fig. 2    eine Ansicht entsprechend Fig. 1,

Fig. 3    eine teils schematische Einzelheit X entsprechend der Fig. 1 in größerem Maßstab,

Fig. 4    eine Ansicht zur Erläuterung eines Montageschrittes mit Bauteilen der Fig. 2.

Ein Aufbau 1 für einen nicht näher dargestellten Personenwagen umfasst einen außerhalb einer Längsmittelebene des Personenwagens verlaufenden Längsträger 2, der in einem rückwärtigen Trägerbereich 3, in dem ein nicht dargestelltes Hinterrad vorgesehen ist, eine von der Fahrbahn weggeführte stufenartige Abkröpfung 4 aufweist. Unterhalb der Abkröpfung 4 ist ein Hilfsrahmen 5 zur Aufnahme von Fahrwerksteilen angeordnet. Mit 6 ist eine sich am Längsträger 2 abstützende aufrechte Säule bezeichnet, auf der ein erstes Knotenelement 7 fest ruht.

Am Längsträger 2 ist auf der dem Hilfsrahmen 5 abgekehrten Seite ein zweites Knotenelement 8 fest angeordnet. Zwischen den Knotenelementen 7, 8 erstreckt sich ein Hohlprofil 9, das als schräge Aufbaustrukturstrebe - für Zug- und Druckbeanspruchung sowie Abstützungsfunktion - zwischen Säule 6 und Trägerbereich 3 des Längsträgers 2 wirksam ist. Die Komponenten des Aufbaues, wie Längsträger 2, Säule 6, Knotenelemente 7, 8 bestehen aus Aluminiumlegierungen, wobei die beispielsweise gegossenen Knotenelemente 7, 8 durch Schweißen, Kleben oder einer anderen geeigneten Fügetechnik mit den benachbarten AL-Aufbaustrukturteilen (Säule 6, Längsträger 2) verbunden sind. Die Knotenelemente 7, 8 weisen muffenartige Aufnahmen 10, 11 auf, in die das rohrförmige Hohlprofil 9 mit beispielsweise rundem, ovalem oder vieleckigem Querschnitt hineinragt.

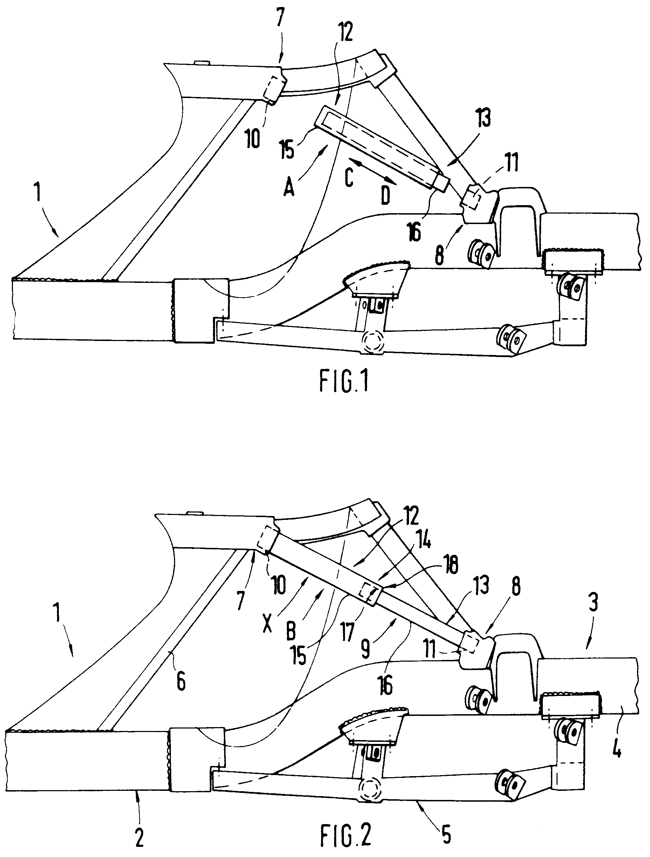

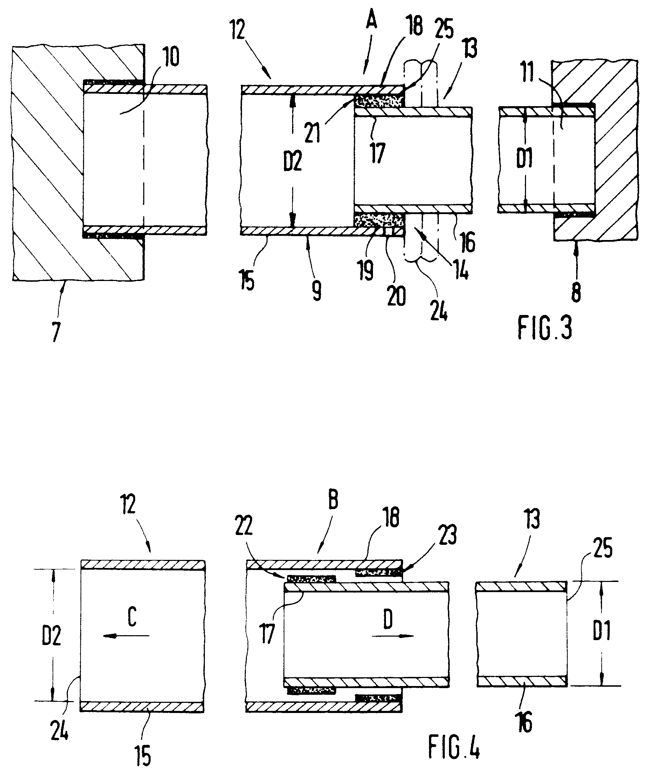

Aus produktionstechnischen Gründen wird das Hohlprofil 9 nachträglich in die Knotenelemente 7, 8 eingesetzt, d.h. eine Folgemontage -Knoten 7 mit Hohlprofil 9 und dann letzteres mit Knotenelement 7- scheidet aus. Deshalb besteht das die beabstandeten Knotenelemente 7, 8 verbindende Hohlprofil 9 aus zwei Profilabschnitten 12, 13 etwa gleicher Länge, die aus einer Vormontagelage A - Fig. 1 - in eine konstruktive Endlage B - Fig. 2 - gebracht werden. In letzterer Lage sind die Profilabschnitte 12, 13 in den Aufnahmen 10, 11 gehalten und in einem zwischen den Knotenelementen 7, 8 liegenden Verbindungsabschnitt 14 miteinander verbunden. Die Profilabschnitte 12, 13 sind Rohrteile 15, 16 mit kreisrundem, ovalem oder vieleckigem Querschnitt, wobei der Verbindungsabschnitt 14 durch einen ersten inneren Rohrendbereich 17 des Rohrteils 16 und einen zweiten äußeren Rohrendbereich 18 des Rohrteils 15 gebildet wird; beide Rohrendbereiche 17, 18 sind teleskopartig übereinandergeschoben.

Die Rohrendbereiche 17, 18 werden im Bereich des Verbindungsabschnittes 14 mittels einer Klebeverbindung 19 in Lage gehalten. Sie kann durch einen Einkomponentenkleber gebildet werden, der z.B. über Bohrungen 20 am äußeren Rohrendbereich 18 in einen Ringraum 21 zwischen dem äußeren und inneren Rohrendbereich 17 einbringbar ist. Indessen besteht auch die Möglichkeit, die Klebeverbindung 19 durch einen Zweikomponentenkleber zu bilden. Dabei ist eine erste Kleberkomponente 22 dem Rohrendbereich 17 und eine zweite Kleberkomponente 23 dem Rohrendbereich 18 zugeordnet. Beide Kleberkomponenten 22, 23 sind im vorgefertigten Zustand der Rohrteile 15,16 auf diese aufgebracht.

Ein optimaler Zusammenbau der beiden Rohrteile 15, 16 wird dann ereicht, wenn sie unterschiedliche Durchmesser D1<D2 - Außendurchmesser des Rohrteils 16 ist kleiner als Innendurchmesser des Rohrteils 15 - aufweisen, damit sie über ihre gesamte Länge teleskopartig verschiebbar sind. In diesem Fall werden die den Kleberkomponenten 22, 23 abgekehrten Seiten 24, 25 der Rohrteile 15, 16 einander zugekehrt und danach durch Bewegung in Richtung C und D aus der Vormontagelage A in die Endlage B gebracht. In letzterer werden die Kleberkomponenten 22, 23 aktiviert.

Sofern das Rohrteil 16 mit kreisförmigem Querschnitt 17 (innen und außen) über einen wesentlichen Teilbereich seiner Länge einen konstanten Durchmesser -innen und außen- aufweist, werden sich an ihm bei einer definierten axialen Beanspruchung ohne besondere Vorkehrungen mehrere energieaufnehmende Ringfalten 24 zu einem Paket bilden - Fig. 3 -, wobei sich eine erste Ringfalte direkt am Ende 25 des Rohrteils 15 abstützt.

**Patentansprüche**

1.  Aufbau für Fahrzeuge, insbesondere Personenwagen, der beispielsweise aus Aluminiumlegierungen hergestellte Hohlprofile und Knotenelemente umfasst, die eine Rahmenstruktur bildend, zusammengesetzt sind, **dadurch gekennzeichnet, daß** zwischen beabstandeten Knotenelementen (6, 7) ein wenigstens durch zwei aus einer Vormontagelage (A) in eine konstruktive Endlage (B) gebrachte Profilabschnitte (11, 12) gebildetes Hohlprofil (8) vorgesehen ist, wobei die Profilabschnitte (11, 12) einerseits in Aufnahmen (9, 10) der Knotenelemente (6, 7) gehalten und andererseits in einem zwischen den Knotenelementen (6, 7) liegenden Verbindungsabschnitt (13) beispielsweise durch Fügen miteinander verbunden sind.

2.  Aufbau nach Anspruch 1, dadurch gekennzeichnet, daS die Profilabschnitte (11, 12) Rohrteile (14, 15) mit beispielsweise rundem, ovalem oder vieleckigem Querschnitt sind.

3.  Aufbau nach den Ansprüchen 1 und 2, **dadurch gekennzeichnet, daß** der Verbindungsaschnitt (13) durch einen ersten inneren Rohrendbereich (16) des einen Rohrteils (14) und einen zweiten äußeren Rohrendbereich (17) des anderen Rohrteils (15) gebildet wird.

4.  Aufbau nach Anspruch 3, **dadurch gekenn-**

zeichnet, daß die Rohrteile (14, 15) mittels einer zwischen den Rohrendbereichen (16, 17) wirkenden ringartigen Klebeverbindung (18) miteinander verbunden sind.

5.  Aufbau nach Anspruch 4, **dadurch gekennzeichnet, daß** die Klebeverbindung (18) durch einen Einkomponentenkleber gebildet wird, der beispielsweise über Bohrungen (19) am äußeren Rohrendbereich in den Ringraum (19) zwischen beiden Rohrendbereichen (16, 17) eingebracht ist.

6.  Aufbau nach Anspruch 4, **dadurch gekennzeichnet, daß** die Klebeverbindung (18) durch einen Zweikomponentenkleber gebildet ist.

7.  Aufbau nach Anspruch 6, **dadurch gekennzeichnet, daß** der Zweikomponentenkleber durch eine erste Kleberkomponente (21) des inneren Rohrendbereichs (16) und eine zweite Kleberkomponente (22) des äußeren Rohrendbereichs (17) gebildet wird, wobei die beiden Klebekomponenten (21, 22) im vorgefertigten Zustand der Rohrteile (14, 15) auf diese aufgebracht sind.

8.  Aufbau nach einem oder mehreren der vorangehenden Ansprüche, **dadurch gekennzeichnet, daß** die Rohrteile (11, 12) unterschiedliche Durchmesser (D1<D2) aufweisen und derart in ihre vorgesehene konstruktive Endlage (B) gebracht werden, daß die den Kleberkomponenten (21, 22) abgekehrten Enden (23, 24) der Rohrteile (11, 12,) einander zugekehrt und danach bis zum Erreichen der konstruktiven Endlage (B) verschoben werden.

9.  Aufbau nach Anspruch 8, **dadurch gekennzeichnet, daß** die Kleberkomponenten (21, 22) nach Erreichen der konstruktiven Endlage (B) aktiviert werden.

10. Aufbau nach einem oder mehreren der vorangehenden Ansprüche, **dadurch gekennzeichnet, daß** zumindest das Rohrteil (14) mit dem inneren Rohrendbereich (16) einen kreisförmigen Querschnitt und über eine wesentliche Länge einen konstanten Durchmesser aufweist.

FIG.1

FIG.2

FIG.3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0 146 716 (FLECK)<br>* Ansprüche 1,2; Abbildungen 1,2 *<br>--- | 1 | B62D23/00<br>B62D27/02 |
| Y | DE-C-2 167 305 (DOLLER)<br>* Spalte 3, Zeile 14 - Zeile 20; Abbildung 1 *<br>--- | 1 | |
| A | US-A-2 668 722 (MÜLLER)<br>* Spalte 5, Zeile 1 - Zeile 8; Abbildung 1 *<br>--- | 1 | |
| A | GB-A-2 049 567 (FIAT)<br>* Abbildungen 1-3 *<br>--- | 2 | |
| A | DE-A-2 018 802 (SCHÄTZLE)<br>* Ansprüche 1-3; Abbildungen 1-6 *<br>--- | 2 | |
| A | DE-A-3 811 427 (AUDI)<br>* Spalte 2, Zeile 19 - Zeile 35 *<br><br>----- | 4 | |

**RECHERCHIERTE SACHGEBIETE (Int. Cl.5)**

B62D

Der vorliegende Recherchenbericht wurde für alle Patentansprüche erstellt

| Recherchenort | Abschlußdatum der Recherche | Prüfer |
|---|---|---|
| BERLIN | 11 SEPTEMBER 1992 | LUDWIG H.J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument